# EUROPÄISCHE PATENTSCHRIFT

(11) **EP 1 277 393 B1**
(45) Veröffentlichungstag und Bekanntmachung des Hinweises auf die Patenterteilung: **25.04.2007**
(21) Anmeldenummer: 02013052.2
(22) Anmeldetag: 13.06.2002
(51) Int. Cl.: A01D 67/00, A01D 41/12

(54) **Stützradanordnung für eine landwirtschaftliche Arbeitsmaschine**
Support wheel arrangement for an agricultural working machine
Agencement de roue porteuse pour une machine agricole

(30) Priorität: 27.06.2001 DE 10130645
(43) Veröffentlichungstag der Anmeldung: 22.01.2003
(73) Patentinhaber: CLAAS Selbstfahrende Erntemaschinen GmbH, 33428 Harsewinkel (DE)
(72) Erfinder: Heidjann, Franz, 33428 Harsewinkel (DE); Holtmann, Bernd, 48324 Sendenhorst (DE)

(56) Entgegenhaltungen:
- DE-A- 2 101 710
- DE-A- 19 918 551
- DE-U- 7 101 995

## Beschreibung

Die Erfindung betrifft eine Stützradanordnung für eine landwirtschaftliche Arbeitsmaschine gemäß dem Oberbegriff der Anspruchs 1.

Die DE 7 101 995 offenbart einen Mähdrescher 1 mit in Tandemanordnung hintereinander angeordneten Haupttragrädern 5, 6, auf die eine Raupenkette 8 aufgelegt ist. Die Tandemanordnung ist um eine gemeinsame Achse 2 schwenkbar am Mähdrescher 1 angeordnet, damit sich die Tandemanordnung an Bodenunebenheiten anpassen kann. Nachteilig bei diesem Stand der Technik ist, das die Haupttragräder 5, 6 nur zusammen betreibbar sind.

Aus der DE 199 18 551 ist eine als Feldhäcksler ausgeführte gattungsgemäße landwirtschaftliche Erntemaschine bekannt geworden, die frontseitig über einen ein landwirtschaftliches Arbeitsgerät aufnehmenden Zwischenanbau verfügt. Damit die Last des landwirtschaftlichen Arbeitsgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass bei Straßentransport zumindest ein Teil der Masse des landwirtschaftlichen Arbeitsgerätes über diese Stützräder auf dem Boden abgestützt wird. Dies hat zunächst den Vorteil, dass die frontseitige Trägerfahrzeugachse bei Straßenfahrt nicht die gesamte Last des adaptierten landwirtschaftlichen Arbeitsgerätes abstützen muss. Die Adaptierung der Stützräder am Zwischenanbau der landwirtschaftlichen Arbeitsmaschine erfordert jedoch eine erhebliche Versteifung dieses Zwischenanbaus, da beim Fahren auf unebenem Gelände erhebliche Stoßbelastungen auftreten können, die von dem Zwischenanbau aufgenommen werden müssen. Während der Arbeit auf dem Feld ist der Zwischenanbau derartiger landwirtschaftlicher Erntemaschinen in der Regel in eine bodennahe Position abgesenkt, sodass die an dem Zwischenanbau adaptierten Stützräder den Boden berühren können. Sind dabei die von den relativ kleiner Stützrädern auf dem Boden abzustützenden Lasten hoch, kann dies aufgrund ihrer geringen Aufstandsfläche zu erheblichen, die Wachstumsbedingungen der Pflanzen erheblich verschlechternden Bodendrücken führen.

Der Erfindung liegt deshalb die Aufgabe zugrunde, eine Stützradanordnung für landwirtschaftliche Arbeitsmaschinen so weiterzubilden, dass die beschriebenen Nachteile des Standes der Technik vermieden und niedrige Bodendrücke auch im Bereich des oder der Stützräder erreicht werden.

Erfindungsgemäß wird die Aufgabe durch eine Stützradanordnung für landwirtschaftliche Erntemaschinen mit den kennzeichnenden Merkmalen des Anspruchs 1 gelöst.

Indem das im Bereich der Aufnahmevorrichtung angeordnete wenigstens einen Stützrad einem Laufrade der benachbarten Achse der landwirtschaftlichen Arbeitsmaschine vorgeordnet ist und die einander zugeordneten Stützräder und Laufräder von einem Hüllmittel umgeben sind, wird erreicht, dass jeweils ein Stützrad und ein Laufrad der benachbarten Fahrzeugachse ein den Bodendruck reduzierendes Raupenfahrwerk bilden.

Damit wenigstens zwei Raupenfahrwerke kollisionsfrei an der landwirtschaftlichen Erntemaschine angeordnet werden können, sind in einer vorteilhaften Ausgestaltung der Erfindung, die Stützräder beidseits der Aufnahmevorrichtung angeordnet.

Um einen störungsfreien Umlauf des Hüllmittels zu gewährleisten, sind die Stützräder den jeweiligen Laufrädern mittig vorgeordnet.

Je nach Ausführungsform des Hüllmittels können die Stützräder in einer weiteren vorteilhaften Ausgestaltung der Erfindung eine Breite aurweisen, die entweder gleich der Breite der jeweiligen Laufräder oder geringer als deren Breite ist.

In einer vorteilhaften Weiterbildung der Erfindung können die Stützräder höhenverstellbar mit der Aufnahmevorrichtung und/oder der landwirtschaftlichen Erntemaschine in Wirkverbindung stehen, sodass das in Fahrtrichtung vorn liegende Stützrad während der Fahrt auf lockerem Untergrund angehoben werden kann, um dem bei Raupenfahrwerken auftretenden sogenannten "Schlammschieben" entgegenzuwirken.

Auf konstruktiv einfache Weise kann diese Höhenverstellung dadurch erreicht werden, dass die Stützräder über Hubzylinder mit der Aufnahmevorrichtung der landwirtschaftlichen Erntemaschine in Wirkverbindung stehen.

Eine besonders einfache Ausführung des erfindungsgemäßen Hüllmittels wird dann erreicht, wenn das Hüllmittel von an sich bekannten Gummiketten oder Gleisketten gebildet wird.

Um die Universalität der landwirtschaftlichen Erntemaschine zu erhöhen, kann in einer weiter vorteilhaften Ausgestaltung der Erfindung das Hüllmittel entfernt werden, sodass die Stützräder und die Laufräder der jeweiligen Achse der landwirtschaftlichen Arbeitsmaschine auch ohne diese Hüllmittel betrieben werden können. Dies ist vor allem dann von Vorteil, wenn die landwirtschaftliche Erntemaschine auf ebenem und festem Untergrund wie Straßen mit höherer Fahrgeschwindigkeit bewegt werden soll, da Raupenfahrwerke nur bedingt höhere Fahrgeschwindigkeiten ermöglichen.

Damit die landwirtschaftliche Erntemaschine entweder mit Raupenfahrwerk oder separaten Stütz- und Laufrädern betrieben werden kann, wobei beim Betrieb mit Stütz- und Laufrädern eine hohe Wendigkeit erreicht werden soll, können die Stützräder auch als lenkbare Stützräder ausgeführt sein, deren Lenkbarkeit bei Raupenbetrieb sperrbar ist.

In vorteilhafter Weiterbildung der Erfindung können die Stützräder von Stützrahmen aufgenommen werden, die die Stützräder über Tragarme sowohl mit der landwirtschaftlichen Erntemaschine als auch mit der Aufnahmevorrichtung verbinden, wobei zumindest der die Stützräder mit der landwirtschaftlichen Erntemaschine verbindende Tragarm teleskopierbar ausgeführt ist. Auf dies Weise ist es möglich, den die Stützräder aufnehmenden Stützrahmen zugleich als Spanneinrichtung für das jeweilige Hüllmittel einzusetzen.

Weiter vorteilhafte Ausgestaltungen sind Gegenstand weiterer Unteransprüche und werden anhand von Zeichnungen näher erläutert.

Es zeigen:
- Figur 1: eine erste Teilseitenansicht der erfindungsgemäßen landwirtschaftlichen Erntemaschine
- Figur 2: eine weitere Teilseitenansicht der erfindungsgemäßen landwirtschaftlichen Erntemaschine
- Figur 3: eine Detailansicht der erfindungsgemäßen Stützradanordnung

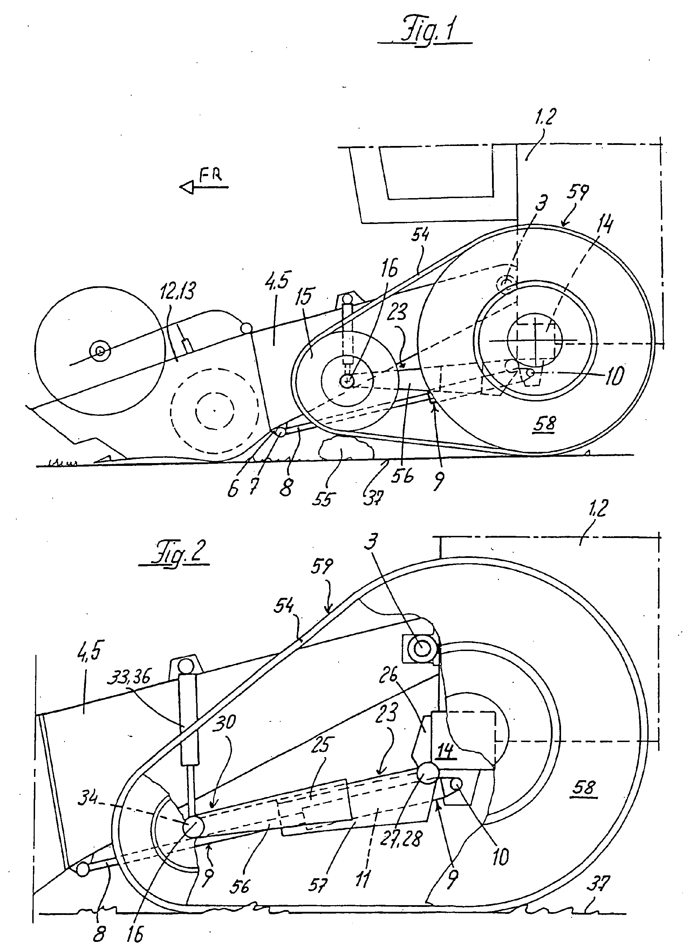

In Figur 1 ist eine als Mähdrescher 2 ausgeführte landwirtschaftliche Erntemaschine 1 dargestellt, die in ihrem frontseitigen Bereich eine quer zur Fahrtrichtung FR weisende Schwenkachse 3 aufnimmt, die wiederum die als an sich bekannter Schrägförderer 4 ausgeführte Aufnahmevorrichtung 5 in vertikaler Richtung verschwenkbar aufnimmt. Untenseitig sind dem Schrägförderer 4 Halteflansche 6 angeformt, die einenends um eine quer zur Fahrrichtung FR weisende Achse 7 verschwenkbar die frontseitigen Enden der Kolbenstangen 8 von Hubzylindern 9 aufnehmen. Trägerfahrzeugseitig sind die Hubzylinder 9 um ebenfalls quer zur Fahrtrichtung FR weisende Achsen 10 schwenkbeweglich an der landwirtschaftlichen Erntemaschine 1 angeordnet. Indem die Hubzylinder 9 druckbeaufschlagt oder druckentlastet werden, bewegen sich die Kolbenstangen 8 aus den Zylindern 11 der Hubzylinder 9 heraus oder tauchen in diese ein, sodass die Aufnahmevorrichtung 5 eine Schwenkbewegung in vertikaler Richtung um die am Trägerfahrzeug 1 angeordnete Achse 3 ausführt. Neben der Realisierung der Schwenkbewegung der Aufnahmevorrichtung 5 haben die Hubzylinder 9 zudem die Aufgabe, die Aufnahmevorrichtung 5 am Trägerfahrzeug 1 abzustützen.

Frontseitig ist der Aufnahmevorrichtung 5 in an sich bekannter und deshalb nicht näher beschriebener Weise ein als Getreideschneidwerk 12 ausgeführtes landwirtschaftliches Arbeitsgerät 13 zugeordnet.

Damit die Last der Aufnahmevorrichtung 5 und des an ihr adaptierten landwirtschaftlichen Arbeitsgerätes 13 nicht allein über die Hubzylinder 9 in das Trägerfahrzeug 1 im Bereich seiner Vorderachse 14 eingeleitet wird, sind der Aufnahmeeinrichtung 5 im Bereich zwischen dem Getreideschneidwerk 12 und der Vorderachse 14 des Mähdreschers 2 beidseitig Stützräder 15 zugeordnet. Die Radachse 16 jedes Stützrades 15 wird von einer Nabe 17 umschlossen, der an ihrem innenseitigen, im Bereich der Stützräder 15 liegenden Ende ein Aufnahmeflansch 18 angeformt ist, der von einer in vertikaler Richtung weisenden im einfachsten Fall als axial gesicherter Bolzen 19 ausgeführten Schwenkachse 20 durchsetzt wird. Im Felgenbereich 21 der Stützräder 15 durchsetzt die vertikale Schwenkachse 20 zudem eine Führungsöse 22, die anderenends an einem ersten erfindungsgemäßen Tragarm 23 befestigt ist. Im dargestellten Ausführungsbeispiel ist jedem Stützrad 15 ein solcher Tragarm 23 zugeordnet, wobei jeder Tragarm 23 an seinem das jeweilige Stützrad 15 aufnehmenden Ende von einem beliebig geformten Kopfstück 24 gebildet wird, dem trägerfahrzeugseitig ein Winkelprofilträger 25 mit sich in Richtung der Vorderachse 14 des Trägerfahrzeugs 1 vergrößerndem Querschnitt angeschweißt ist. Der Vorderachse 14 der landwirtschaftlichen Arbeitsmaschine 1 sind frontseitig Halteflansche 26 zugeordnet, die von im einfachsten Fall als axial gesicherte Bolzen 27 ausgeführten quer zur Fahrtrichtung FR weisenden Achsen 28 durchsetzt werden. Der Abstand zwischen benachbarten Halteflanschen 26 wird von den flanschartigen Verlängerungen 29 der Winkelprofilträger 25 in der Weise durchsetzt, dass der jeweilige Bolzen 27 den ihm zugeordneten Winkelprofilträger 25 in vertikaler Richtung verschwenkbar aufnimmt. Auf diese Weise ist der wenigstens eine erste Tragarm 23 des Stützrahmens 30 schwenkbeweglich mit der landwirtschaftlichen Erntemaschine 1 im Bereich ihrer Vorderachse 14 verbunden.

Dem Kopfstück 24 des ersten Tragarms 23 ist auf der dem jeweiligen Stützrad 15 abgewandten Seite eine Haltelasche 31 angeformt. Die jeweilige Haltelasche 31 nimmt das frontseitige Ende der Kolbenstange 32 eines Hubzylinders 33 um eine quer zur Fahrtrichtung FR weisende Achse 34 schwenkbar auf, wobei das zylinderseitige Ende des Hubzylinders 33 um eine ebenfalls quer zur Fahrtrichtung FR angeordnete Achse 35 schwenkbar an der Aufnahmevorrichtung 5 der landwirtschaftlichen Erntemaschine 1 befestigt ist. Damit bildet der jeweilige Hubzylinder 33 einen weiteren Tragarm 36 des Stützrahmens 30, der das wenigstens eine Stützrad 15 schwenkbeweglich mit der Aufnahmevorrichtung 5 der landwirtschaftlichen Erntemaschine 1 verbindet. Auf diese Weise wird jedes der Stützräder 15 über einen aus einem ersten Tragarm 25 und wenigstens einem weiteren Tragarm 36 bestehenden Stützrahmen 30 sowohl mit der landwirtschaftlichen Erntemaschine 1 als auch der Aufnahmevorrichtung 5 verbunden. Es liegt im Rahmen der Erfindung, dass der im Ausführungsbeispiel zweiteilig ausgeführte Stützrahmen 30 einteilig gestaltet ist und dieser einteilige Stützrahmen 30 über eine oder mehrere quer zur Fahrtrichtung FR angeordnete Schwenkachsen 28 schwenkbar an der landwirtschaftlichen Erntemaschine 1 angeordnet wird. Auch wäre es denkbar, dass die Aufnahmevorrichtung 5 über nur einen Hubzylinder 9 oder eine beliebige Anzahl von Hubzylindern 9 an der landwirtschaftlichen Erntemaschine 1 abgestützt wird.

Indem die zweiten Tragarme 36 als Hubzylinder 33 ausgeführt sind ist gewährleistet, dass die Zuordnung der Stützräder 15 zur Aufnahmevorrichtung 5 in vertikaler Richtung verändert werden kann, sodass die Stützräder 15 unabhängig von der Lage der Aufnahmevorrichtung 5 stets den Boden 37 berühren können.

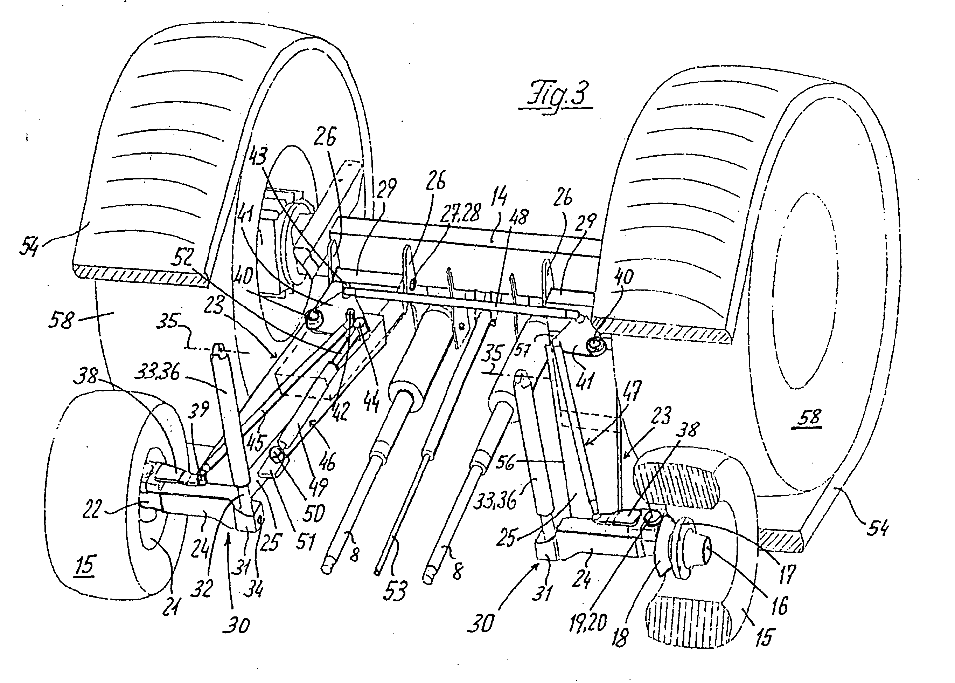

In vorteilhafter Weiterbildung der Erfindung wird der die vertikale Schwenkachse 20 der Stützräder 15 bildende Bolzen 19 gemäß Figur 3 obenseitig von einem Lenkhebel 38 umgriffen, dem einenends ein in vertikaler Richtung weisender Stehbolzen 39 zugeordnet ist. Der das jeweilige Stützrad 15 aufnehmende Tragarm 23 verfügt an seinem der Vorderachse 14 der landwirtschaftlichen Erntemaschine 1 zugeordneten Ende über einen in vertikaler Richtung weisenden Stehbolzen 40. An dem Stehbolzen 40 ist ein Winkelhebel 41 schwenkbeweglich angeordnet, dem wiederum eine Vielzahl von Stehbolzen 42, 43, 44 drehfest zugeordnet sind. Eine erste Koppelstange 45 verbindet den Stehbolzen 39 des Lenkhebels 38 schwenkbeweglich mit einem auf dem Winkelhebel 41 angeordneten Stehbolzen 42, wobei sich die Koppelstange 45 oberhalb und im Bereich des Winkelprofilträgers 25 des jeweiligen Tragarms 23 in Richtung Vorderachse 14 der landwirtschaftlichen Erntemaschine 1 erstreckt. Im dargestellten Ausführungsbeispiel gemäß Figur 3 sind den benachbarten Stützrädern 15 zueinander spiegelbildlich angeordnete Lenkhebel 38, Koppelstangen 45 und Winkelhebel 41 zugeordnet, die jeweils einen Teillenkmechanismus 46, 47 für das jeweilige Stützrad 15 bilden. Im Bereich der Vorderachse 14 sind die beiden Teillenkmechanismen 46, 47 über eine mit den rückwärtigen Stehbolzen 43 der Winkelhebel 41 schwenkbeweglich verbundene Verbindungsstrebe 48 miteinander gekoppelt. Einem der Winkelhebel 41 ist über einen weiteren Stehbolzen 44 ein Lenkzylinder 49 schwenkbeweglich zugeordnet, der anderenends ebenfalls um eine vertikale Achse 50 schwenkbar von einem an dem Winkelprofilträger 25 befestigten Halteflansch 51 aufgenommen wird. Durch Druckbeaufschlagung des doppeltwirkenden Lenkzylinders 49 kann die Kolbenstange 52 aus dem Lenkzylinder 49 herausgeschoben oder in diesen hineinbewegt werden, wobei die Stützräder 15 gleichgerichtete Schwenkbewegungen um ihre vertikalen Schwenkachsen 20 ausführen.

Um auch bei fehlendem landwirtschaftlichen Arbeitsgerät 13 sicherzustellen, dass die erfindungsgemäßen Stützräder 15 eine Mindestlast auf dem Boden 37 abstützen, können einerseits die die Aufnahmevorrichtung 5 verschwenkenden Hubzylinder 9 als doppelt wirkende Hubzylinder 9 ausgeführt sein, sodass über die in den Zylinder 11 der Hubzylinder 9 einfahrende Kolbenstange 8 festgelegt werden kann, wie hoch die von den Stützräder 15 auf dem Boden 37 abzustützende Last sein soll. Sind die die Aufnahmevorrichtung 5 verschwenkenden Hubzylinder 9 einfachwirkend ausgeführt, kann zwischen Aufnahmevorrichtung 5 und der landwirtschaftlichen Erntemaschine 1 ein Zugzylinder 53 zwischengeschaltet sein, der bei Druckbeaufschlagung die erfindungsgemäßen Stützräder 15 auf den Boden 37 zwingt, wobei über die Druckbeaufschlagung des Zugzylinders 53 die Größe der abzustützenden Last bestimmbar ist.

In erfindungsgemäßer Weise sind im dargestellten Ausführungsbeispiel den Laufrädern 58 der frontseitigen Achse 14 der landwirtschaftlichen Erntemaschine 1 in Fahrtrichtung FR mittig je ein Stützrad 15 vorgeordnet. Jedes der beiderseits der Aufnahmevorrichtung 5 angeordneten Stützräder 15 steht mit dem ihm nachgeordneten Laufrad 58 über ein Hüllmittel 54 in Wirkverbindung, sodass das Stützrad 15, das jeweilige Laufrad 58 und das diesen zugeordnete Hüllmittel 54 in erfindungsgemäßer Weise ein Raupenlaufwerk 59 bilden.

Es liegt im Rahmen der Erfindung, dass die über das Hüllmittel 54 miteinander verbundenen Stützräder 15 und Laufräder 58 von gleicher oder unterschiedlicher Breite sein können. In nicht dargestellter Weise können auch mehrere nebeneinander angeordnete Stützräder 15 mit einem einzigen Laufrad 58 über das Hüllmittel 54 verbunden sein. Diese Ausführung wird vor allem dann vorzuziehen sein, wenn die Breite der Stützräder deutlich geringer als die Breite der Laufräder 58 ist und zur sicheren Führung des Hüllmittels 54 annähernd gleiche Breiten der Stützräder und der mit ihnen in Wirkverbindung stehenden Laufräder 58 vorgesehen werden sollen.

Im einfachsten Fall kann das erfindungsgemäße Hüllmittel 54 als an sich bekannte Gleiskette oder Gummikette ausgeführt sein.

Um die gemäß dem zuvor Beschriebenen lenkbar ausgeführten Stützräder 15 als Raupenlaufwerk 59 betreiben zu können, ist es erforderlich, dass der Lenkzylinder 49 in an sich bekannter Weise sperrbar ausgeführt sein muss. Auf diese Weise wird es möglich, die lenkbaren Stützräder 15 und die ihnen nachgeordneten Laufräder 58 unabhängig voneinander oder als miteinander gekoppeltes Raupenlaufwerk 59 zu betreiben. Dies hat vor allem den Vorteil, dass die landwirtschaftliche Erntemaschine 1 beim Einsatz auf dem Feld in bodenschonender Weise mit Raupenlaufwerken 59 betrieben werden kann, während sie beim Fahren auf der Strasse zur Realisierung hoher Fahrgeschwindigkeiten mit separaten Stützräder 15 und ihnen nachgeordneten Laufrädern 58 betreibbar ist.

Indem die Stützräder 15 über Hubzylinder 9, 33 mit der Aufnahmevorrichtung 5 und der landwirtschaftlichen Erntemaschine 1 gelenkig verbunden sind, ist es möglich durch Druckbeaufschlagung/Druckentlastung der die Stützräder 15 an der Aufnahmevorrichtung 5 haltenden Hubzylinder 33 eine vertikale Relativbewegung der Stützräder 15 zu den Laufrädern 58 zu realisieren. Dies hat den Vorteil, dass die frontseitigen Stützräder 15 während des Feldeinsatzes angehoben werden könne, sodass das die Fahreigenschaften eines Raupenlaufwerkes 59 verschlechternde Aufschieben von Bodenbestandteilen 55 im Frontbereich der Raupenlaufwerke 59 reduziert oder gänzlich vermieden wird.

Da umlaufende Hüllmittel 54 mit zunehmender Betriebsdauer einer allmählichen Dehnung unterliegen, können in einer vorteilhaften Weiterbildung der Erfindung gemäß Figur 2 die Winkelprofilträger 25 der Tragarme 23 von einem ersten Tragarmsegment 56 und wenigstens einem zweiten Tragarmsegment 57 gebildet werden. In an sich bekannter und deshalb nicht näher dargestellter Weise können die Tragarmsegmente 56, 57 gegeneinander verschoben werden, wobei diese Verschiebebewegung im einfachsten Fall gegen die Wirkung einer Feder gedämpft sein kann, sodass einerseits das Hüllmittel 54 stets gespannt ist und andererseits in das jeweilige Raupenfahrwerk 59 eingeleitete Stoßbelastungen gedämpft werden können.

### Bezugszeichenliste

- 1: landwirtschaftliche Arbeitsmaschine
- 2: Mähdrescher
- 3: Schwenkachse
- 4: Schrägförderer
- 5: Aufnahmevorrichtung
- 6: Halteflansch
- 7: Achse
- 8: Kolbenstange
- 9: Hubzylinder
- 10: Achse
- 11: Zylinder
- 12: Getreideschneidwerk
- 13: landwirtschaftliches Arbeitsgerät
- 14: Vorderachse
- 15: Stützrad
- 16: Radachse
- 17: Nabe
- 18: Aufnahmeflansch
- 19: Bolzen
- 20: Schwenkachse
- 21: Felgenbereich
- 22: Führungsöse
- 23: Tragarm
- 24: Kopfstück
- 25: Winkelprofilträger
- 26: Halteflansch
- 27: Bolzen
- 28: Achse
- 29: Verlängerung
- 30: Stützrahmen
- 31: Haltelasche
- 32: Kolbenstange
- 33: Hubzylinder
- 34: Achse
- 35: Schwenkachse
- 36: Tragarm
- 37: Boden
- 38: Lenkhebel
- 39: Stehbolzen
- 40: Stehbolzen
- 41: Winkelhebel
- 42: Stehbolzen
- 43: Stehbolzen
- 44: Stehbolzen
- 45: Koppelstange
- 46: Teillenkmechanismus
- 47: Teillenkmechanismus
- 48: Verbindungsstrebe
- 49: Lenkzylinder
- 50: vertikale Schwenkachse
- 51: Halteflansch
- 52: Kolbenstange
- 53: Zugzylinder
- 54: Hüllmittel
- 55: Erdaufwurf
- 56: erstes Tragarmsegment
- 57: zweites Tragarmsegment
- 58: Laufrad
- 59: Raupenfahrwerk

## Patentansprüche

1. Landwirtschaftliche Arbeitsmaschine mit einer Stützradanordnung und wenigstens einer Aufnahmevorrichtung zur Adaptipn eines landwirtschaftlichen Arbeitsgeräts, wobei der landwirtschaftliche Arbeitsmaschine in ihrem dem Arbeitsgerät zugewandten Bereich ein oder mehrere Stützräder zugeordnet sind,
wobei das wenigstens ein Stützrad (15) zumindest einem Laufrad (58) einer Achse (14) der landwirtschaftlichen Arbeitsmaschine (1, 2) in Fahrtrichtung FR vorgeordnet ist, **dadurch gekennzeichnet, dass** das wenigstens eine Stützrad (15) und das nachgeordnete Laufrad (58) von einem gemeinsamen Hüllmittel (54) umschlossen werden und wobei die Stützräder (15) höhenverstellbar sind.

2. Arbeitsmaschine nach Anspruch 1,
**dadurch gekennzeichnet,**
**dass** der Aufnahmevorrichtung (4, 5) wenigstens ein erstes Stützrad (15) und ein weiteres Stützrad (15) quer zur Fahrtrichtung FR zugeordnet ist und mit dem dem jeweiligen Stützrad (15) nachgeordneten Laufrad (58) der wenigstens einen Achse (14) der landwirtschaftlichen Arbeitsmaschine (1, 2) von jeweils einem gemeinsamen Hüllmittel (54) umschlossen werden.

3. Arbeitsmaschine nach einem oder mehreren der vorhergehenden Ansprüche,
**dadurch gekennzeichnet,**
**dass** die Stützräder (15) den Laufrädern (58) der Achse (14) der landwirtschaftlichen Arbeitsmaschine (1, 2) in Fahrtrichtung FR mittig vorgeordnet sind.

4. Arbeitsmaschine nach einem oder mehreren der vorhergehenden Ansprüche,
**dadurch gekennzeichnet,**
**dass** die Breite der Stützräder (15) und die Breite der Laufräder (58) gleich oder voneinander verschieden ist.

5. Arbeitsmaschine nach einem oder mehreren der vorhergehenden Ansprüche,
**dadurch gekennzeichnet,**
**dass** das wenigstens eine erste Stützrad (15) und das eine weitere Stützrad (15) höhenverstellbar mit der Aufnahmevorrichtung (4, 5) und/oder der landwirtschaftlichen Arbeitsmaschine (1, 2) in Wirkverbindung stehen.

6. Arbeitsmaschine nach Anspruch 5,
**dadurch gekennzeichnet,**
**dass** die Höhenverstellbarkeit der Stützräder (15) durch wenigstens einen das jeweilige Stützrad (15) mit der Aufnahmevorrichtung (4, 5) verbindenden Hubzylinder (33) erreicht wird.

7. Arbeitsmaschine nach einem oder mehreren der vorhergehenden Ansprüche,
**dadurch gekennzeichnet, dass** das Hüllmittel (54) eine Gleiskette ist.

8. Arbeitsmaschine nach einem oder mehreren der vorhergehenden Ansprüche,
**dadurch gekennzeichnet,**
**dass** das Hüllmittel (54) eine Gummikette ist.

9. Arbeitsmaschine nach einem oder mehreren der vorhergehenden Ansprüche,
**dadurch gekennzeichnet,**
**dass** die Stützräder (15) lenkbar sind und die Lenkung der Stützräder (15) sperrbar ist.

10. Landwirtschaftliche Arbeitsmaschine nach einem oder mehreren der vorhergehenden Ansprüche,
**dadurch gekennzeichnet,**
**dass** die Stützräder (15) von einem Stützrahmen (30) mit einem ersten Tragarm (23) und wenigstens einem weiteren Tragarm (36) aufgenommen werden, wobei der erste Tragarm (23) mit der Vorderachse (14) der landwirtschaftlichen Arbeitsmaschine (1, 2) und der wenigstens eine weitere Tragarm (36) mit der Aufnahmevorrichtung (4, 5) in Wirkverbindung steht.

11. Arbeitsmaschine nach Anspruch 10,
**dadurch gekennzeichnet,**
**dass** der jedes Stützrad (15) mit der landwirtschaftlichen Arbeitsmaschine (1, 2) verbindende Tragarm (23) von einem ersten Tragarmsegment (56) und wenigstens einem weiteren Tragarmsegment (56) gebildet wird und die Tragarmsegmente (56, 57) gegeneinander verschiebbar sind.

## Claims

1. An agricultural working machine comprising a support wheel arrangement and at least one receiving device for adaptation of an agricultural working implement, wherein one or more support wheels are associated with the agricultural working machine in its region towards the working implement, wherein the at least one support wheel (15) is arranged forwardly of at least one land wheel (58) of an axle (14) of the agricultural working machine (1, 2) in the direction of travel FR, **characterised in that** the at least one support wheel (15) and the land wheel (58) arranged behind same are surrounded by a common enveloping means (54) and wherein the support wheels (15) are adjustable in height.

2. A working machine according to claim 1 **characterised in that** at least one first support wheel (15) and a further support wheel (15) is associated transversely with respect to the direction of travel FR with the receiving device (4, 5) and are surrounded by a respective common enveloping means (54) with the land wheel (58), arranged behind the respective support wheel (15), of the at least one axle (14) of the agricultural working machine (1, 2).

3. A working machine according to one or more of the preceding claims **characterised in that** the support wheels (15) are arranged centrally in front of the land wheels (58) of the axle (15) of the agricultural working machine (1, 2) in the direction of travel FR.

4. A working machine according to one or more of the preceding claims **characterised in that** the width of the support wheels (15) and the width of the land wheels (58) are equal to or different from each other.

5. A working machine according to one or more of the preceding claims **characterised in that** the at least one first support wheel (15) and the one further support wheel (15) are operatively connected adjustably in height to the receiving device (4, 5) and/or the agricultural working machine (1, 2).

6. A working machine according to claim 5 **characterised in that** the adjustability in height of the support wheels (15) is achieved by at least one stroke cylinder (33) connecting the respective support wheel (15) to the receiving device (4, 5).

7. A working machine according to one or more of the preceding claims **characterised in that** the enveloping means (54) is a crawler chain.

8. A working machine according to one or more of the preceding claims **characterised in that** the enveloping means (54) is a rubber chain.

9. A working machine according to one or more of the preceding claims **characterised in that** the support wheels (15) are steerable and the steering of the support wheels (15) is lockable.

10. An agricultural working machine according to one or more of the preceding claims **characterised in that** the support wheels (15) are accommodated by a support frame (30) having a first carrier arm (23) and at least one further carrier arm (36), wherein the first carrier arm (23) is operatively connected to the front axle (14) of the agricultural working machine (1, 2) and the at least one further carrier arm (36) is operatively connected to the receiving device (4, 5).

11. A working machine according to claim 10 **characterised in that** the carrier arm (23) connecting each support wheel (15) to the agricultural working machine (1, 2) is formed by a first carrier arm segment (56) and at least one further carrier arm segment (57) and the carrier arm segments (56, 57) are displaceable relative to each other.

## Revendications

1. Machine agricole comportant un agencement de roues d'appui et au moins un dispositif adaptateur pour l'adaptation d'un outil de travail agricole, une ou plusieurs roues d'appui étant associées à la machine agricole dans la région de celle-ci voisine de l'outil de travail, et la roue d'appui (15) au nombre d'au moins une étant disposée devant au moins une roue porteuse (58) d'un essieu (14) de la machine agricole (1, 2), vu dans la direction de déplacement FR, **caractérisée par le fait que** la roue d'appui (15) au nombre d'au moins une et la roue porteuse (58) placée en arrière de celle-ci sont entourées par un moyen formant bandage (54) commun et que les roues d'appui (15) sont réglables en hauteur.

2. Machine agricole selon la revendication 1, **caractérisée par le fait qu**'au moins une première roue d'appui (15) et une roue d'appui (15) supplémentaire sont associées au dispositif adaptateur (4, 5) transversalement à la direction de déplacement FR et, conjointement avec la roue porteuse (58) de l'essieu (14) au nombre d'au moins un de la machine agricole (1, 2) placée en arrière de la roue d'appui (15) concernée, sont entourées chaque fois par un moyen formant bandage (54) commun.

3. Machine agricole selon une ou plusieurs des revendications précédentes, **caractérisée par le fait que** les roues d'appui (15) sont disposées en avant, de manière centrée, par rapport aux roues porteuses (58) de l'essieu (14) de la machine agricole (1, 2).

4. Machine agricole selon une ou plusieurs des revendications précédentes, **caractérisée par le fait que** la largeur des roues d'appui (15) et la largeur des roues porteuses (58) sont identiques ou différentes

5. Machine agricole selon une ou plusieurs des revendications précédentes, **caractérisée par le fait que** la première roue d'appui (15) au nombre d'au moins une et la roue d'appui (15) supplémentaire sont liées activement avec possibilité de réglage en hauteur au dispositif adaptateur (4, 5) et/ou à la machine agricole (1, 2).

6. Machine agricole selon la revendication 5, **caractérisée par** l**e fait que** le réglage en hauteur des roues d'appui (15) est obtenu à l'aide d'au moins un vérin (33) qui relie la roue d'appui (15) concernée au dispositif adaptateur (4, 5).

7. Machine agricole selon une ou plusieurs des revendications précédentes, **caractérisée par le fait que** le moyen formant bandage (54) est une chenille.

8. Machine agricole selon une ou plusieurs des revendications précédentes, **caractérisée par le fait que** le moyen formant bandage (54) est une chenille en caoutchouc.

9. Machine agricole selon une ou plusieurs des revendications précédentes, **caractérisée par le fait que** les roues d'appui (15) sont orientables et que la commande des roues d'appui (15) peut être verrouillée.

10. Machine agricole selon une ou plusieurs des revendications précédentes, **caractérisée par le fait que** les roues d'appui (15) sont supportées par un châssis (30) avec un premier bras de support (23) et au moins un bras de support (36) supplémentaire, le premier bras de support (23) étant lié activement à l'essieu avant (14) de la machine agricole (1, 22) et le bras de support (36) supplémentaire étant lié activement au dispositif adaptateur (4, 5).

11. Machine agricole selon une ou plusieurs des revendications précédentes, **caractérisée par le fait que** le bras de support (23) qui relie chaque roue d'appui (15) à la machine agricole (1, 2) est formé d'un premier segment de bras de support (56) et d'au moins un segment de bras de support (57) supplémentaire, et que les segments de bras de support (56, 57) peuvent coulisser l'un par rapport à l'autre.
